# EUROPÄISCHE PATENTSCHRIFT

(11) **EP 2 348 304 B1**
(45) Veröffentlichungstag und Bekanntmachung des Hinweises auf die Patenterteilung: **13.09.2023**
(21) Anmeldenummer: 11000573.3
(22) Anmeldetag: 25.01.2011
(51) Int. Cl.: G01N 21/47, B07C 5/12, B07C 5/34, G01N 21/59, G01N 21/85

(54) **Vorrichtung zur Detektion und Aussortierung optisch inaktiver Substanzen**
Device for detecting and sorting out optical inactive substances
Dispositif de détection et de tri de substances optiques inactives

(30) Priorität: 25.01.2010 DE 102010005768
(43) Veröffentlichungstag der Anmeldung: 27.07.2011
(73) Patentinhaber: Krieg, Gunther, Prof.Dr.Ing., 76227 Karlsruhe (DE)
(72) Erfinder: Bohleber, Jürgen, 77815 Bühl (DE); Fey, Dirk, 97630, Neewiller (FR)
(74) Vertreter: LBP Lemcke, Brommer & Partner Patentanwälte mbB

(56) Entgegenhaltungen:
- WO-A1-00/67002
- WO-A1-2008/000433
- WO-A2-2008/142496
- US-A1- 2006 109 456

## Beschreibung

Die Erfindung betrifft eine Vorrichtung zur Erkennung von optisch inaktiven Fremdmaterialien, wie z.B. Glassplitter, mineralische Produkte, Gummiteilchen, Metall- sowie Keramik- /Steinteilchen usw. in Stoffmischungen. Insbesondere fallen unter diese Anwendungskategorie auch sogenannte schwarze Körper, d.h. Stoffe, die optische Strahlung sämtlicher Wellenlängen zu 100 % absorbieren und sich daher den Anwendungsmöglichkeiten der Absorptionsspektroskopie entziehen. Von besonderer Wichtigkeit sind für diese Anwendung auch alle Stoffe, die weder optisch fluoreszieren noch Raman-aktiv sind. Außerdem fallen auch optisch reflektierende Teilchen unter diese Anwendungskategorie.

Der zunehmende Einsatz von Kunststoffen in verschiedensten Industriebereichen, wie z.B. Lebensmittelindustrie, Automobiltechnik, Pharmazie- und Medizintechnik, Bauindustrie, hat zu einer enormen Steigerung des Verbrauchs von Rohöl geführt. Eine Mehrfachverwendung von Kunststoffen durch Recyclingprozesse zur stoffspezifischen Erkennung und Trennung/Sortierung verschiedener Kunststofftypen ist daher in Zukunft unumgänglich. Da diese Recyclingprozesse ihr Ausgangsmaterial im Wesentlichen aus Sammlungen von Müll beziehen, sind wertlose Verunreinigungen aus bestimmten Stoffen wie Steinchen, Metall, Glas, Keramik, unvermeidlich. Letztere können jedoch im Recycling-Nutzstrom in den meisten Fällen nicht toleriert und müssen daher ausgeschieden werden bevor das rückgewonnene Nutzmaterial seiner Wiederverwendung zugeführt werden kann.

Die Identifikation und die selektive Trennung von Wertmaterialien ist vor allem durch Einsatz optischer Methoden der Fluoreszenz, Raman-Streuung, und Absorption mit hoher Trennschärfe möglich. Wie aus den Schutzrechten EP 0606639, DE 198 16 881.0, DE 101 49 505.6 ersichtlich, wird mit diesen Technologien eine effiziente Detektion und Trennung auch bei höchsten Prozessgeschwindigkeiten pro Analyse im Mikro- bzw. Nano-Sekunden-Bereich erreicht. Ein großer Nachteil dieser Verfahren beruht jedoch auf der Tatsache, dass optisch inaktive Substanzen damit nicht erfasst werden und damit auch nicht sortiert werden können.

Die Erfassung und Sortierung auch optisch inaktiver Substanzen erlaubt die WO 2008/142496 A2. Dabei wird als reflektierende Schicht eine zylindrische Rolle offenbart. Diese Rolle kann entlang einem Abstreifer rotieren und dadurch gereinigt werden. Außerdem kann diese Rolle neben ihrer optischen Funktion Bestandteil der mechanischen Stützkonstruktion des Gerätes sein.

Von dieser vorbekannten Konstruktion geht die vorliegende Erfindung im Oberbegriff des Patentanspruches 1 aus.

Ziel der vorliegenden Erfindung ist eine Vorrichtung, die es ermöglicht, optisch inaktive Substanzen in Stoffmischungen wie oben bereits genannt, zu erkennen und auszusortieren.

Die vorgenannte Aufgabe wird dadurch gelöst, dass die reflektierende Schicht auf einer Hintergrundplatte auf der der einfallenden optischen Strahlung zugewandten Seite angeordnet ist. Anstelle einer zylindrischen Rolle wird erfindungsgemäß also eine Platte eingesetzt.

Die optische Strahlung, welche durch Laser oder konventionelle Strahlungsquellen erzeugt wird und die zur Anregung von Fluoreszenz, Raman-Streuung und Absorption der betreffenden Stoffe dient, trifft zusätzlich auf eine reflektierende, insbesondere auf eine diffus reflektierende Schicht und wird von dieser re-emittiert und anschließend detektiert. Sobald ein inaktives Material in diesen re-emittierten Strahl gelangt, wird letzterer teilweise durch Abschattung geschwächt und die Schwächung durch ein Sensorsystem, welches in der Regel einen in diesem Spektralbereich empfindlichen Sensor, ein Sensorarray oder ein Spektrometer darstellt, gemessen. Als Folge wird eine Aktorik wirksam, welche das unerwünschte Material aus dem Nutzstrom entfernt. Der Nutzstrom kann dabei bestehen aus PET-Flakes/PET-Granulat, falls es sich um das Recycling von Polyethylentheraphtalat, z. B. für Anwendungen bei Flaschen oder Behältern in der Getränke- bzw. Lebensmittelindustrie, handelt, oder z.B. aus PVC- oder davon abgetrenntem SMA-Mahlgut als Recycling-Produkte bei der Wiederverwendung von Materialien aus Armaturenbrettern von Automobilen. Ferner kann der Nutzstrom auch beliebige andere Kunststoffteilchen und Fremdstoffe enthalten.

Besonders zweckmäßig ist es in diesem Zusammenhang, wenn die im re-imitierten Strahl durch inaktive Stoffe erzeugte Abschattung, also die Schwächung der Lichtintensität vom gleichen Sensorsystem erfasst wird, das bereits für die Messung der Fluoreszenz, der Raman-Streuung oder dergleichen dient, um die optisch aktiven Substanzen zu selektieren. Eine solche kombinierte Sensorik ist nicht nur kostengünstig, sondern zeichnet sich auch durch hohe Genauigkeit bei der Detektion aus. Wird beispielsweise eine Fluoreszenzstrahlung bei gleichzeitiger Intensitätsschwächung gemessen, so folgt daraus, dass ein optisch aktives, also ein werthaltiges Teilchen vorliegt. Wird hingegen nur eine Intensitätsschwächung ohne Fluoreszenzstrahlung festgestellt, so handelt es sich um ein optisch inaktives Teilchen, das aussortiert werden soll.

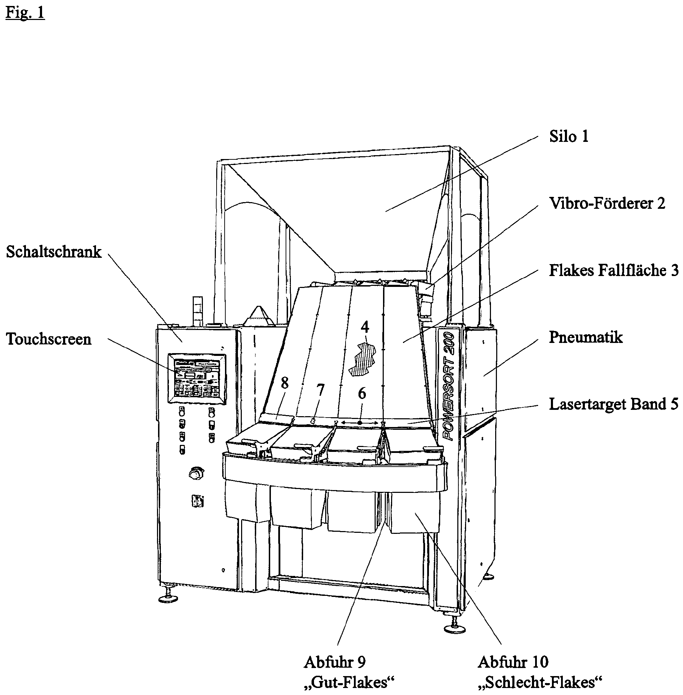

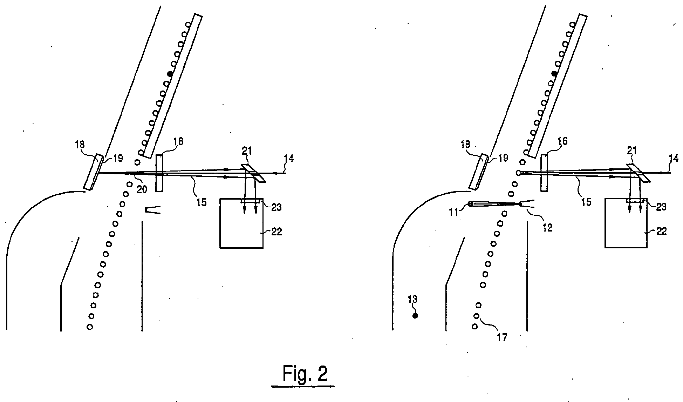

Die neue Vorrichtung wird im Folgenden anhand der Figuren 1 und 2 näher beschrieben. Dabei sind die wesentlichen Erfindungsmerkmale wie folgt näher dargestellt:
- Fig.1:: zeigt die Frontalansicht des Gesamtsystems bestehend aus optischer Detektionseinheit mit Sortiersystem.
- Fig.2:: zeigt das Prinzip des optischen Systems zur Detektion von optisch inaktiven Fremdteilchen, die weder fluoreszieren noch Raman-Streuung aufweisen.

Das Gesamtsystem gemäß Fig. 1 führt die zu trennenden Stoffe bzw. Stoffgemische vorzugsweise über ein Silo (1) in Form von Mahlgut als Flakes, Granulat oder geometrisch bezüglich Größe und Form beliebigen Bruchstücken dem Detektionssystem zu. Nach dem Silo (1) werden die Stoffe - im Ausführungsbeispiel Kunststoff-Flakes - über Vibrationsförderer (2) und geneigte Fallflächen (3) bzw. Fallrinnen (4) vereinzelt und überqueren nach Beschleunigung durch die Schwerkraft in einer sich anschließenden gleichförmigen Bewegung ein Lasertarget Band (5). Durch eine in Bandrichtung erfolgende Hochgeschwindigkeits-Abtastung durch oszillierende, etwa quer zur Fallrichtung (zeilenförmig) scannende Laserstrahlen (6) wird jedes Flake (7) mehrfach über optisch transparente bandförmige Fenster (8) von den Laserstrahlen getroffen, optisch angeregt und emittiert stoffspezifische spektrale Fingerprints in Form von Fluoreszenzlicht und/oder Raman-Streuung. Aus der stoffspezifischen Form und der Amplitude der Fingerprints, wie sie bereits in DE 198 16 881.0 dargestellt sind, werden sowohl die chemische Zusammensetzung als auch die Konzentrationen der Flakes ermittelt. Unterhalb des Lasertarget-Bandes angeordnete Luftimpuls-Düsen, die in Form einer zeilenförmigen Array-Anordnung parallel und stromabwärts zum Lasertarget-Band aufgereiht sind, werden nach Detektion eines nicht erwünschten Stoffes aktiviert, und lenken dadurch das betreffende unerwünschte Flake auf eine weiter außen liegende Flugbahn, so dass es anschließend in einen der Abfuhrschächte (10) für "Schlecht Flakes" fällt, wohingegen die erwünschten Materialien ohne Richtungsänderung in einen der Abfuhrschächte (9) für "Gut Flakes" gelangen, um der Wiederverwertung zugeführt zu werden. Als Beispiel im Rahmen des Recyclings von Plastik für Anwendungen in der Getränke- und Lebensmittelindustrie für Materialien von "Gut Flakes" sei Polyethylentheraphtalat (PET), für Schlecht Flake"Polyvinylchlorid (PVC) genannt. Beide Stoffe weisen charakteristische und stark unterschiedliche Fluoreszenz- bzw. Raman-Spektren auf und können daher eindeutig, d.h. stoffspezifisch detektiert und daher in "gut/schlecht"-Fraktionen (9)/(10) getrennt werden.

Figur 2 zeigt den Strahlengang in vergrößerter Darstellung: Kollineare-Laserstrahlen (14) gehen zunächst durch einen gelochten Ablenkspiegel (21) und eine Frontscheibe (16) hindurch, passieren dann den Produktstrom der herunterfallenden Flakes bis sie auf eine Hintergrundplatte (18) mit reflektierender Schicht (19) treffen. Von dort werden die Laserstrahlen diffus zurückgestrahlt. Die reflektierte Strahlung (15) wird durch den genannten Ablenkspiegel (21) einem Spektrometer oder Sensor (22) mit vorgeschaltetem Bandsperrfilter (23) zugeführt, wo die Auswertung erfolgt und ggf. die Selektion des vom Laserlicht erfassten Teilchens erfolgt.

Treffen die Laserstrahlen (14) wie im rechten Teil von Figur 2 dargestellt auf ein optisch aktives Teilchen, so lösen sie Fluoreszenz- und/oder Raman-Strahlung aus, die charakteristisch für die Materialbeschaffenheit des Teilchens ist. Der Spektrometer oder Sensor (22) erkennt dieses Teilchen dann als "Gut Flake" (17), das im Produktstrom verbleiben kann. Handelt es sich hingegen um ein optisch inaktives Teilchen, so löst es beim Auftreffen der Laserstrahlen keine Fluoreszenz- und/oder Raman-Strahlung aus, wohl aber eine Abschattung der zur reflektierenden Schicht (19) gerichteten Strahlung wie auch der von ihr zurückgeworfenen Strahlung (20). Diese Intensitätsabschwächung wird von dem Spektrometer oder Sensor (22) erkannt und da nicht gleichzeitig eine Fluoreszenz- und/oder Raman-Strahlung auftritt, wird das Teilchen als "Schlecht Flake" (11 bzw. 13) erkannt und mittels Druckluftdüsen (12) aus dem herabfallenden Produktstrom herausgeblasen, so dass es in einen Abwurfschacht für die "Schlecht Fraktion" landet.

Im. Ergebnis werden also Fremdteilchen (11), die weder Fluoreszenz noch Raman-Streuung aufweisen und daher unerwünscht in die Fraktion für "Gut Flakes"(17) gelangen würden, erkannt und dann über Druckluftdüsen (12) in die "Schlecht Fraktion" (13) oder in eine dritte Fraktion überführt. Während bei optisch aktiven Stoffen die anregenden kollinearen Laserstrahlen (14) wie bereits oben gesagt eine Rückstreuung (15) von Fluoreszenz- und Raman-Strahlung bewirken, fallen letztgenannte bei optisch inaktiven Substanzen aus. Um optisch inaktive Substanzen trotzdem zu erkennen und in Abfuhrschächte (10 bzw. 13) auszuleiten, treffen die kollinearen Laserstrahlen (14), die mit den vorgenannten Laserstrahlen (6) identisch sein können, nach der transparenten Frontscheibe (16), welche das Lasersystem und die Optik vor Staub schützt, auf die Hintergrundplatte (18) mit reflektierender Schicht (19), welche das Laserlicht (14) als diffus reflektiertes Laserlicht (20) wieder auf den Produktstrom und sodann zumindest teilweise dem Sensorsystem/ Spektrometer (22) zuführt, wo das reflektierte Laserlicht (20) bezüglich. optischer Intensität detektiert wird. Sobald ein optisch inaktives Material (11) in den Strahlengang (20) des von der Hintergrundplatte (18) reflektierten Laserlichtes (20) gelangt, wird letzteres teilweise durch Abschattung geschwächt und diese Schwächung detektiert. In Folge kann ein Auswurf-Luftimpuls an dem Ventil (12), welches dem jeweiligen Teilchen (11) zugeordnet ist, generiert werden, so dass das unerwünschte Material aus dem PET-Flakestrom ausgeschieden, d.h. in die "Schlecht Fraktion" (13) umgeleitet wird.

Als weiteres Kennzeichen der Erfindung ist die Oberflächenbeschichtung (19) der Hintergrundplatte (18) zu nennen. Diese besteht erfindungsgemäß aus einer lichtbeständigen und thermisch stabilen Reflektionsschicht, welche das Laserlicht optimal und teilweise diffus reflektiert. Wesentlich dabei ist, dass das Laserlicht intensiv gestreut wird, ohne dass dabei Fluoreszenz erzeugt wird. Dazu eignen sich insbesondere mineralische und/oder glasähnliche Schichten. Das reflektierte Licht, behält seine Wellenlänge, wogegen die optischen Fingerprints der optisch aktiven Substanzen ihre Wellenlänge ändern und sich dadurch ganz wesentlich spektral unterscheiden. Das optische Spektrum der einfallenden Laserstrahlung (14) und das Spektrum des von der Oberfläche (19) der Hintergrundplatte (18) rückgestreuten Lichts (20) werden von einem zweiten Spektrometer oder von dem in DE 198 16 881.0 beschriebenen Spektrometer detektiert und von den optischen Fingerprints der optisch aktiven Substanzen klar unterschieden. Alternativ zum Spektrometer kann auch ein optischer Sensor eingesetzt werden, der speziell auf die Wellenlängen des einfallenden Laserlichtes (14) selektiv empfindlich ist.

Zweckmäßig ist vor dem Spektrometer ein Bandsperrfilter angeordnet, der eine Sperrwirkung von etwa 10⁻⁴ bis etwa 10⁻⁵ aufweist. Dadurch ist sichergestellt, dass das von der reflektierenden Schicht (19) rückgestrahlte Licht das in ähnlicher Intensität von dem Spektrometer empfangen wird, wie das fluoreszierende Licht und dass eine Blendung und vorzeitige Ermüdung des Spektrometers durch das starke Laserlicht vermieden wird.

Das oben beschriebene Ausführungsbeispiel ist eine spezielle Realisierung der Erfindung. Die Erfindung kann in gleicher Weise ohne Einschränkung der universellen Gültigkeit auch in anderen Anordnungen zur Detektion und Unterscheidung optisch inaktiver Substanzen von optisch aktiven, d.h. fluoreszierenden und/oder Raman-Streuung aufweisenden, Stoffen eingesetzt werden. Insbesondere kann das Verfahren nicht nur wie hier beschrieben unter Einsatz von Laserlicht, sondern auch durch Verwendung von konventionellen Planckschen Strahlern oder von Halbleiter-Leuchtdioden realisiert werden.

## Patentansprüche

1. Vorrichtung zur Detektion von optisch inaktiven Substanzen in einem Gemisch mit optisch bezüglich Fluoreszenz und Raman-Streuung aktiven Stoffen, mit
- einer Laserlichtquelle, einer konventionellen Strahlungsquelle und/oder Halbleiter Leuchtdioden zur Einstrahlung von Licht zur Stoffdetektion durch Auslösung optischer Aktivität,
- einem Sensorsystem (22) zur Messung optischer Aktivität in Form von Fluoreszenz oder Raman-Streuung, wobei Spektren, die durch Fluoreszenz und Raman-Streuung erzeugt werden, zur chemischen Materialbestimmung herangezogen werden, und
- einer reflektierenden Schicht (19), auf die zumindest ein Teil des eingestrahlten Lichts oder zusätzlich eingestrahltes Licht einer weiteren Lichtquelle trifft, wobei die Schicht (19) das auftreffende Licht diffus reflektiert und das von dieser Schicht (19) reflektierte Licht zum Nachweis optisch inaktiver Substanzen (11) dient, durch Messung der Lichtreduktion des reflektierten Lichtes infolge von Abschattung durch den inaktiven Stoff, wobei als Unterscheidungsmerkmal zwischen optisch aktiven und optisch inaktiven Substanzen ausgenutzt wird, dass die Spektren des diffus gestreuten Lichtes und die des einfallenden Lichtes identisch sind und eine optisch inaktive Substanz durch eine Abschattung erkannt wird, bei der nicht gleichzeitig eine Fluoreszenz- und/oder Raman-Strahlung gemessen wird,
**dadurch gekennzeichnet,**
**dass** die reflektierende Schicht (19) auf einer Hintergrundplatte (18) auf der der einfallenden optischen Strahlung zugewandten Seite angeordnet ist.

2. Vorrichtung nach Anspruch 1, **dadurch gekennzeichnet, dass** das eingestrahlte Licht (5, 6, 14) zur Anregung von Fluoreszenz und Raman-Streuung eingesetzt wird und gleichzeitig auf die reflektierende Schicht (19) trifft, welche zumindest einen Teil (20) der optischen Strahlung reflektiert und dass die reflektierte Strahlung (12) zur Detektion von optisch inaktiven Substanzen durch Abschattung der Strahlung durch diese Substanzen verwendet wird.

3. Vorrichtung nach Anspruch 1, **dadurch gekennzeichnet, dass** die reflektierende Schicht (19) aus einer lichtbeständigen thermisch stabilen Reflektionsschicht besteht.

4. Vorrichtung nach Anspruch 1, **dadurch gekennzeichnet, dass** die reflektierende Schicht (19) aus einem glasähnlichen und/oder mineralischen Material besteht.

## Claims

1. Device for the detection of optically inactive substances in a mixture with compounds optically active with respect to fluorescence and Raman scattering, with
- a laser light source, a conventional radiation source and/or semiconductor light emitting diodes for irradiating light for substance detection by inducing optical activity,
- a sensor system (22) for measuring optical activity in the form of fluorescence or Raman scattering, whereby spectra generated by fluorescence and Raman scattering are used for chemical material identification, and
- a reflecting layer (19) on which at least part of the incident light or additionally incident light from a further light source impinges, wherein the layer (19) diffusely reflects the incident light and the light reflected by this layer (19) being used to detect optically inactive substances (11), by measuring the light reduction of the reflected light due to shadowing by the inactive substance, wherein as a distinguishing feature between optically active and optically inactive substances is used the fact that the spectra of the diffusely scattered light and those of the incident light are identical, and an optically inactive substance is detected by shadowing in which fluorescence and/or Raman radiation is not measured simultaneously,
**characterised in that**,
the reflective layer (19) is arranged on a background plate (18) on the side facing the incident optical radiation.

2. Device according to claim 1, **characterised in that** the incident light (5, 6, 14) is used to excite fluorescence and Raman scattering and simultaneously impinges on the reflecting layer (19) which reflects at least part (20) of the optical radiation and that the reflected radiation (12) is used to detect optically inactive substances by shadowing the radiation by these substances.

3. Device according to claim 1, **characterised in that** the reflecting layer (19) consists of a light-resistant thermally stable reflective layer.

4. Device according to claim 1, **characterised in that** the reflecting layer (19) consists of a glass-like and/or mineral material.

## Revendications

1. Dispositif destiné à la détection de substances optiquement inactives dans un mélange avec des substances optiquement actives en ce qui concerne fluorescence et diffusion Raman, comportant
- une source de lumière laser, une source de rayonnement traditionnelle et/ou des diodes électroluminescentes à semi-conducteur, destinée(s) à l'émission de lumière pour la détection de substances par déclenchement d'activité optique,
- un système de capteurs (22) destiné à la mesure d'activité optique sous forme de fluorescence ou de diffusion Raman, dans lequel des spectres qui sont produits par fluorescence et diffusion Raman sont utilisés pour la détermination de substances chimiques, et
- une couche réfléchissante (19) sur laquelle vient frapper au moins une partie de la lumière incidente ou de la lumière additionnellement incidente d'une autre source de lumière, dans lequel la couche (19) réfléchit de manière diffuse la lumière incidente et la lumière réfléchie par cette couche (19) sert à la détection de substances optiquement inactives (11), par mesure de la réduction de lumière de la lumière réfléchie par suite d'ombragement par la substance inactive, dans lequel comme caractéristique distinctive entre substances optiquement actives et substances optiquement inactives est mis à profit le fait que les spectres de la lumière dispersée de manière diffuse et ceux de la lumière incidente sont identiques et qu'une substance optiquement inactive est détectée par un ombragement, dans lequel un rayonnement de fluorescence et/ou un rayonnement Raman n'est/ne sont pas mesuré(s) simultanément,
**caractérisé en ce que**
la couche réfléchissante (19) est disposée sur une plaque d'arrière-plan (18) sur le côté tourné vers le rayonnement optique incident.

2. Dispositif selon la revendication 1, **caractérisé en ce que** la lumière émise (5, 6, 14) est utilisée pour l'excitation de fluorescence et diffusion Raman et vient frapper simultanément la couche réfléchissante (19), qui réfléchit au moins une partie (20) du rayonnement optique, et **en ce que** le rayonnement réfléchi (12) est utilisé pour la détection de substances optiquement inactives par ombragement du rayonnement par ces substances.

3. Dispositif selon la revendication 1, **caractérisé en ce que** la couche réfléchissante (19) est constituée d'une couche réfléchissante résistante à la lumière, thermiquement stable.

4. Dispositif selon la revendication 1, **caractérisé en ce que** la couche réfléchissante (19) est constituée d'une matière minérale et/ou semblable au verre.
